Europäisches Patentamt

(19) European Patent Office

Office européen des brevets

(11) Publication number: **0 024 820**
A2

# (12) EUROPEAN PATENT APPLICATION

(21) Application number: 80302579.0

(22) Date of filing: 28.07.80

(51) Int. Cl.³: **G 01 F 11/04**

(30) Priority: 26.07.79 GB 7926156
09.05.80 GB 8015451

(43) Date of publication of application:
11.03.81 Bulletin 81/10

(84) Designated Contracting States:
AT BE CH DE FR GB IT LI NL SE

(71) Applicant: JOHNSON MATTHEY & CO., LIMITED
43 Hatton Garden
London, EC1N 8EE(GB)

(72) Inventor: Irons, Ian Barry
7 Elm Court
Sonning Common Reading, Berkshire(GB)

(74) Representative: Arthur, Bryan Edward
Withers & Rogers 4 Dyer's Buildings Holborn
London EC1N 2JT(GB)

(54) Apparatus and process for dispensing fluids.

(57) Apparatus for dispensing metered quantities of fluids, especially viscous or thermoplastic fluids, comprises first and second members each having at least one passageway therethrough, the members being relatively slidable to bring at least one passageway in each member into registration, the second member containing a piston, whereby fluid introduced into a passageway of the first member displaces the piston when the passageways are in registration thereby ejecting a corresponding volume of fluid from another passageway of the first member.

FIG.1.

EP 0 024 820 A2

Croydon Printing Company Ltd.

## APPARATUS FOR DISPENSING FLUIDS

This invention relates to apparatus for dispensing
fluids, particularly fluids which are viscous, or thermoplastic materials when in a plastic state, including
dispersions of a particulate solid in a fluid or a thermoplastic material. Such fluids and thermoplastic materials
will be referred to herein as fluids of the type described.
In particular the invention provides an apparatus for dispensing
such fluids in metered quantities, that is, a succession of
portions each having predetermined volume.

According to one aspect of the invention an apparatus
for dispensing a fluid as herein defined comprises first and
second members each having at least one passageway therethrough,
the members being relatively slidable to bring at least one
passageway in each member into registration, means for introducing fluid into a passageway of the first member and a piston
mounted for movement within a passageway of the second member
whereby fluid introduced into a passageway of the first member
displaces the piston to eject a portion of fluid from another
passageway of the first member when the appropriate passageways
are in registration.

Conveniently the first member is shaped to straddle the
second member and includes at least two interconnected parts
each having at least one passageway with corresponding passageways in each part aligned with one another, a passageway in the
second member which is slidably moveable so that the passageway
therein is moveable into registration with passageways of the
said two interconnected parts whereby, when the passageways are
in registration and one passageway in the first member is filled
with fluid, the piston is displaceable to eject fluid from the
corresponding passageway in the first member. The piston may, therefore, be regarded as a double-acting piston.

The two interconnected parts may be parts of an annulus in which case the second member has a cylindrical outer surface which mates with the inner surface of the annulus. In this form of the apparatus the relative sliding movement is, of course, rotational or angular. Alternatively, the two interconnected parts may be the legs of a U-shaped frame which straddles the second member in the form of a body having a piston carrying passageway which, upon relative movement between the frame and the body is moveable into registration with passageways formed in the legs of the U-shaped frame.

According to one embodiment of the apparatus as defined in the first aspect, the first member is in the form of an annulus with first and second passageways formed therein, the passageways being angularly displaced and extending from the outer to the inner circumferential surface of the annulus, the second member has a cylindrical outer surface which mates with the inner surface of the annulus and a passageway is formed therethrough which has angularly spaced apart orifices in the cylindrical outer surface, grooves are disposed in either of the mating surfaces, the grooves extending from a passageway orifice in a peripheral direction, and the members are angularly oscillatable relative to each other, the extent of the grooves being such that at the extremities of oscillation the passageway in the second member communicates between the passageways in the first member, the oscillation serving to alternate the orifices of the passageway in the first member.

Preferably, the first member is in the form of an annulus with a passageway at its inner facing orifice extending in the form of a groove peripherally around the inner annular surface on either side of the passageway over an angular distance $(90-x)^{o}$

therefrom, the second member has a passageway formed diametrically therethrough, and the second member is adapted to oscillate rotationally within the first member so that the mean oscillation position of the passageway through the second member coincides with a line normal to the diametrical passageway through the first member, the angular extent of oscillation of the second member on either side of the mean position being greater than $x^o$. In use, and with the second member at its extent of oscillation in one direction, the diametrical passageway therethrough being in registration at each end with respective peripheral grooves of the first member, fluid is introduced through a first portion of the passageway through the first member to displace the piston, thereby ejecting a corresponding volume of fluid through the second (diametrically opposed) portion of the passageway, and the second member is then rotated so that it is at its extent of oscillation in the other direction and the fluid introduction/ejection process is repeated.

Where a groove is formed in the mating surface of the second member, the extent of travel of the piston in the passageway therethrough should be restricted so that the application of fluid into the first member will cause pressure to act on at least the end of the piston, thereby causing it to be displaced.

More preferably, the first member is annular and has a diametrical passageway formed therethrough, the second member has a cylindrical outer surface which mates with the inner surface of the annulus and has a diametrical passageway therethrough so that the passageways can be brought into registration and the second member is rotatable within the first member in indexed stages of substantially $180^o$, the passageways being essentially in registration during the stationary periods.

According to a preferred aspect of the invention, therefore, apparatus for dispensing fluids of the type described comprises:

i) a first annular member having diametrically opposed passageways extending therethrough;

ii) a second member having a cylindrical outer surface which mates with the inner surface of the annulus and has a diametrical passageway extending therethrough, the locus of the orifices of the passageway of the second member being essentially in registration with the internal orifices of the passageways of the first member;

iii) a piston carried in the passageway of the second member and adapted for reciprocating movement wholly within said passageway; and

iv) means to rotate the second member within the first member in indexed stages of substantially $180^{\circ}$, the passageway of the second member being essentially in registration with the passageways of the first member during the stationary periods.

The tolerance between the diameter of the second member and the internal diameter of the first member should be such as to render a sliding fit or a close sliding fit between them, and the piston should have a similar tolerance in the second member. Further, one member should be flanged in order to achieve accurate registration of the locus of the passageway orifices with those of the other member. Alternatively, the second member may have the shape of a major frustum of a sphere or of a symmetrical or unsymmetrical central frustum of a sphere, the passageway being formed along a diameter terminating at opposing spherically curved surfaces, and the internal annular wall of the first member being shaped accordingly. Preferably also, the length of the piston is adjustable.

Conveniently, this may be achieved by removing an inner portion of the second member so that the passageway is in two aligned parts, the piston also being in two parts, each part of the piston extending from within each part of the passageway into the resulting chamber, the two parts of the piston being connected by adjusting means. The adjusting means may also act to restrain the piston from protruding from the passageway, for example, by fitting collars or other projections to the adjusting means to abut against the chamber sides to limit movement of the piston. Alternatively, provision for adjustment during running may be made, for example, by mounting a peg on the piston in the chamber section to co-act at the extent of oscillation with a limiting device, for example formed in a "V" shape, the peg being restrained by the limbs of the "V" and adjustment being allowed by altering the vertical position of the "V" relative to the piston.

Apparatus according to the invention may include a plurality of passageways across the second member and spaced apart axially and optionally also angularly, together with associated passageways through the walls of the first member. Where there is no angular separation between the passageways across the second member, or where there is only one such passageway, the indexed stages are substantially of $180^{\circ}$; where there is angular separation, the indexed stages are related to the separation angle. For example, where two of such passageways are arranged mutually at right angles across the second member, the indexed stages would be of substantially $90^{\circ}$ each. Alternatively, the first member may include a plurality of passageways alternately equipped with fluid inlet means and the second member having a single passageway and piston may be indexed to stop at each in turn.

In use, a reservoir or other manual, semi-automatic or automatic charging means containing a fluid to be dispensed (which fluid may be a viscous material or a thermoplastic material, including a dispersion of a particulate solid in a thermoplastic material) is equipped with pressurising means and, if required, heating means to render plastic a thermoplastic material and has an outlet connected to the exterior orifice of a first passageway through the walls of the first member. Upon application of pressure and, optionally, heat, fluid is forced through the passageway and displaces the piston in the passageway of the second member to the limit of its travel, as determined by the restraining means, thereby forming a charge of fluid in that end of the passageway, whereupon the second member is rotated through an indexed stage. This brings the charge into registration with the internal orifice of the second passageway (diametrically opposed to the first) in the first member and into which passageway the charge is ejected by pressure acting on the reservoir of fluid material forcing a fresh charge into the first passageway and displacing the piston. The cycle is then repeated.

Optionally, a nozzle or other applicator means which may be flexible and may itself be heated may be provided at the exterior orifice of the second passageway.

Once the entire system is primed with fluid, the apparatus dispenses a continuous effusion of fluid in the form of a succession of portions each having predetermined volume which may, for example, be applied directly to a workpiece, used in a formulation or synthesis operation, sealed for storage and so on. We have found that an ideal use is for dispensing thermoplastic brazing or soldering materials.

The invention will now be described by way of example with reference to the accompany drawings, of which:

Fig. 1 is a perspective of one form of apparatus;

Fig. 2 is a perspective of another form of apparatus;

Fig. 3 shows, diagrammatically, a further form of apparatus; and

Fig. 4 shows, diagrammatically, yet a further arrangement of the apparatus shown in Fig. 3.

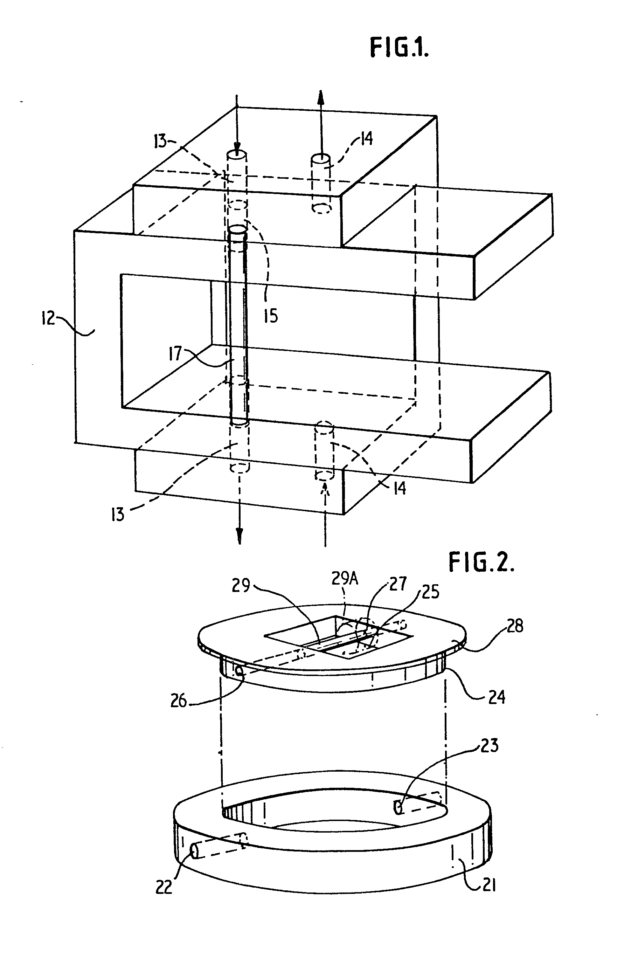

According to Fig. 1, apparatus consists of first and second relatively slidable members 11 and 12, member 11 having passageways 13 and 14 disposed therethrough and member 12 having passageway 15 equipped with a piston 17 such that, with passageways 13 and 15 in registration, fluid introduced at one end of passageway 13 of the first member 11 displaces the piston 17 thereby ejecting a corresponding volume of fluid from the other end of passageway 13, while fluid inlet and outlet through passageway 14 is arranged in the opposite fashion to restore the piston to the original postion when members 11 and 12 are slid relative to one another to bring passageways 14 and 15 into registration. Direction of fluid flow is shown by the arrows.

According to Fig. 2, apparatus consists of an essentially annular member 21 having diametrically opposed passageways, the exterior orifice of a first passageway being shown at 22 and the interior orifice of the second passageway at 23. A cylindrical member is shown at 24 having a central portion 25 removed to create a chamber. The member 24 has a diametrical passageway, orifices of which are shown at 26 and 27, which is maintained, when the member 24 is inserted into the member 21, in the correct position relative to the passageways in the member 21, by means of a flange 28. A piston is carried in the passageway of member 24 and is shown partially at 29; means to adjust the length of the rod and to restrain it from protruding out of the external orifices of the passageway of member 24
are not shown in detail in the drawing but are conveniently
located in the chamber 25 as shown at 29A and may comprise,
for example, a threaded rod carried in a threaded collar and
equipped with suitable locking nuts. Member 24 is equipped
with means (not shown) to rotate it intermittently in indexed
stages so that the passageway therein is substantially in
registration with the passageway in member 21.

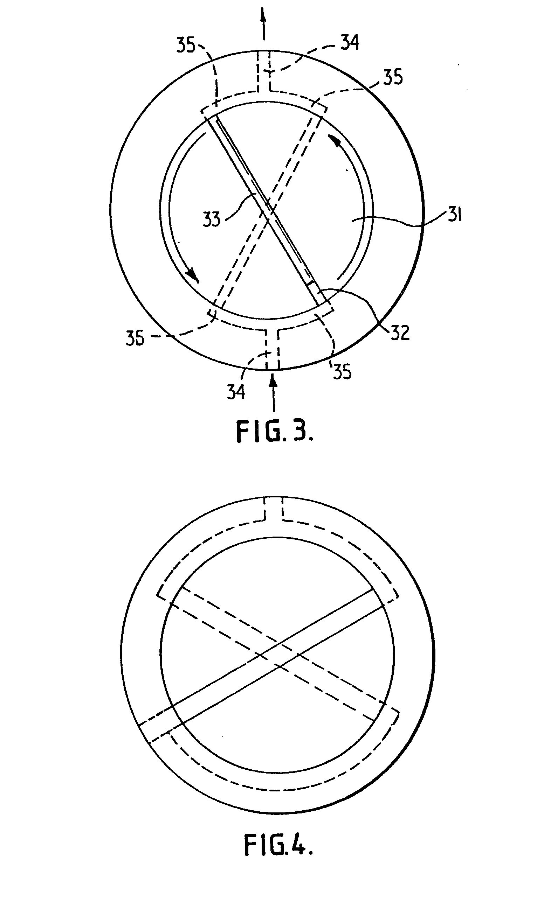

According to Fig. 3, apparatus is shown consisting of
an oscillating second member 31 having a passageway 32 formed
therethrough and carrying a piston 33; inner circumferential
orifices of passageway 34 formed through the first member
terminate in peripherally-extending grooves 35 so that, at the
extent of oscillation of the second member within the first
in each direction, the passageway 32 in the second member is
in communication with the grooves of respective portions of
passageway 34 in the first member.

According to Fig. 4, an alternative arrangement to that
shown in Fig. 3, including an unsymmetrical configuration of
passageways and grooves, is shown.

Clearly, the apparatus as illustrated is very simple and
ancillary features such as reservoir, fluid pressurising means
and applicator means, as well as rod length and adjusting means
and so on, have, for the sake of clarity, been omitted. The
basic features of the apparatus may, however, readily be
replicated and/or modified to create more sophisticated
apparatus for use in volume production or packaging processes,
for example, without departing from the scope of the invention
as described.

One modification is to replicate the structure shown in
Fig. 1 or Fig. 2 to provide a bank of simultaneously-effusing orifices, suitable manifold connections being provided at the respective fluid inlet and ejection orifices. Furthermore, since, in the arrangement shown in Fig. 1, fluid introduced at one end of passageway 13 is ejected at the corresponding end of passageway 14, and vice versa, there is no contact or contamination between the fluid introduced in passageways 13 and 14 respectively. The apparatus is therefore eminently suitable for the continuous metering of different fluids which react together and which are to be separately ducted in metered quantities to a work place, there to be mixed, for example a polyester resin and a catalyst hardener. The metered quantites of each would generally be similar but could be varied by, say, varying the diameter of the piston at one end and altering the aperture diameters at that end similarly.

The invention further includes a process for dispensing fluid in portions each having predetermined volume comprising applying fluid under pressure to a passageway formed through a first member slidable relative to a second member having a passageway formed therethrough to bring passageways into registration with each other, the passageway through the second member containing a piston, whereby the applied fluid displaces the piston to eject a portion of fluid from another passageway formed through the first member when the appropriate passageways are in registration, and sliding the members relative to each other to re-register appropriate passageways and repeat the process.

0024820

## CLAIMS

1.      Apparatus for dispensing fluid comprising first and second members each having at least one passageway therethrough the members being relatively slidable to bring at least one passageway in each member into registration, means for introducing fluid into a passageway of the first member and a piston mounted for movement within a passageway of the second member whereby fluid introduced into a passageway of the first member displaces the piston to eject a portion of fluid from another passageway of the first member when the appropriate passageways are in registration.

2.      Apparatus according to claim 1 wherein the fluid is dispensed as a succession of portions, each portion having predetermined volume.

3.      Apparatus according to claim 1 or claim 2 including adjustment means for adjusting the volume of the said portions.

4.      Apparatus according to claim 1 wherein the first member is shaped to straddle the second member and includes at least two interconnected parts each having at least one passageway with corresponding passageways in each part aligned with one another, a passageway in the second member which is slidably moveable so that the passageway therein is moveable into registration with passageways of the said two interconnected parts, whereby, when the passageways are in registration and one passageway of the first member is filled with fluid, the piston is displaceable to eject fluid from the corresponding passageway in the first member.

5.      Apparatus according to claim 4 wherein the two interconnected parts are parts of an annulus and the second member has a cylindrical outer surface which mates with the inner surface of the annulus.

6. Apparatus according to claim 4 wherein the two interconnected parts comprise the legs of a U-shaped frame and the second member comprises a body which slides within and relative to the frame.

7. Apparatus according to claim 1 wherein the first member is in the form of an annulus with first and second passageways formed therein, the passageways being angularly displaced and extending from the outer to the inner circumferential surface of the annulus, the second member has a cylindrical outer surface which mates with the inner surface of the annulus and a passageway is formed therethrough which has angularly spaced apart orifices in the cylindrical outer surface, grooves being disposed in either of the mating surfaces and extending from a passageway orifice in a peripheral direction, and the members are angularly oscillatable relative to each other, the extent of the grooves being such that at the extremities of oscillation the passageway in the second member communicates between the passageways in the first member, the oscillation serving to alternate the orifices of the passageway in the first member.

8. Apparatus according to claim 7 wherein the first member is in the form of an annulus with a passageway at its inner facing orifice extending in the form of a groove peripherally around the inner annular surface on either side of the passageway over an angular distance $(90-x)^o$ therefrom, the second member has a passageway formed diametrically therethrough, and the second member is adapted to oscillate rotationally within the first member so that the mean oscillation positions of the passageway through the second member coincides with a line normal to the diametrical passageway through the first member, the angular extent of oscillation of the second member on either side of the mean position being greater than $x^o$.

9.      Apparatus according to claim 1 wherein the first member is annular and has a diametrical passageway formed therethrough, the second member has a cylindrical outer surface which mates with the inner surface of the annulus and has a diametrical passageway therethrough so that the passageways can be brought into registration, and the second member is rotatable within the first member in indexed stages of substantially $180^o$, the passageways being essentially in registration during the stationary periods.

10.      Apparatus for dispensing fluid comprising:

        i)   a first annular member having diametrically opposed passageways extending therethrough;

        ii)  a second member having a cylindrical outer surface which mates with the inner surface of the annulus and has a diametrical passageway extending therethrough, the locus of the orifices of the passageway of the second member being essentially in registration with the internal orifices of the passageways of the first member;

        iii) a piston carried in the passageway of the second member and adapted for reciprocating movement wholly within said passageway; and

        iv)  means to rotate the second member within the first member in indexed stages of substantially $180^o$, the passageway of the second member being essentially in registration with the passageways of the first member during the stationary periods.

11.      Apparatus according to claim 1 or claim 10 in which one member is flanged in order to achieve accurate registration of the locus of the passageway orifices with those of the other member.

12.      Apparatus according to claim 10 in which the piston is provided with length adjustment means.

13.      Apparatus according to claim 3 or claim 12 in which the adjustment means is provided in a chamber in the second member so that the passageway therein is in two aligned parts, the piston also is in two parts, each part of the piston extending from within each part of the passageway into the resulting chamber, the two parts of the piston being connected by the adjusting means, and the adjusting means also acts to restrain the piston from protruding from the external orifices of the passageway parts.

14.      Apparatus according to claim 13 in which the adjustment means comprises a threaded rod carrying suitable collars and lock nuts.

15.      Apparatus according to claim 13 in which the adjustment means is activated during a successive dispensing operation.

16.      Apparatus according to claim 14 in which the adjustment means comprises a peg mounted on the piston within the chamber and has a limiting device in the form of a "V", the peg being restrained by the limbs of the "V" at the extent of oscillation and adjustment being allowed by altering the vertical postion of the "V" relative to the piston.

17.      Apparatus according to claim 1 or claim 10 including manual, semi-automatic or automatic fluid charging and/or applicator means.

18.     Apparatus according to claim 17 wherein the charging and/or applicator means is heated.

19.     A process for dispensing fluid in portions each having predetermined volume comprising applying fluid under pressure to a passageway formed through a first member slidable relative to a second member having a passageway formed therethrough to bring passageways into registration with each other, the passageway through the second member containing a piston, whereby the applied fluid displaces the piston to eject a portion of fluid from another passageway formed through the first member when the appropriate passageways are in registration, and sliding the members relative to each other to re-register appropriate passageways and repeat the process.

**FIG.1.**

**FIG.2.**

FIG. 3.

FIG. 4.